# EUROPÄISCHE PATENTSCHRIFT

(11) **EP 3 404 259 B1**
(45) Veröffentlichungstag und Bekanntmachung des Hinweises auf die Patenterteilung: **02.12.2020**
(21) Anmeldenummer: 18170369.5
(22) Anmeldetag: 02.05.2018
(51) Int. Cl.: F03D 13/10, F03D 80/50, B66C 1/10, B66C 23/18

(54) **VERFAHREN, LASTAUFNAHMEMITTEL UND MONTAGESYSTEM ZUM ZUSAMMENBAUEN EINER WINDENERGIEANLAGE**
METHOD, LOAD CARRYING MEANS AND MOUNTING SYSTEM FOR ASSEMBLING A WIND TURBINE
PROCÉDÉ, MOYEN DE SUSPENSION DE CHARGE ET SYSTÈME DE MONTAGE DESTINÉ AU MONTAGE D'UNE ÉOLIENNE

(30) Priorität: 18.05.2017 DE 102017004801
(43) Veröffentlichungstag der Anmeldung: 21.11.2018
(73) Patentinhaber: Siemens Gamesa Renewable Energy Service GmbH, 22297 Hamburg (DE)
(72) Erfinder: EDELMANN, Ulf, 24647 Ehndorf (DE); LIECKFELDT, Nils, 24109 Melsdorf (DE); BRODERSEN, Jens, 24803 Erfde (DE); FISCHER, Sven, 24631 Langwedel (DE); LANGEFELD, Simon, 29690 Gilten (DE); ZIEGENBEIN, Thomas, 24784 Westerrönfeld (DE)
(74) Vertreter: Hahner, Ralph

(56) Entgegenhaltungen:
- CN-A- 105 540 410
- CN-B- 102 491 162
- CN-U- 202 465 024
- US-A1- 2010 034 658
- US-A1- 2017 074 246

## Beschreibung

Die Erfindung betrifft ein Verfahren zum Zusammenbauen einer Windenergieanlage mit einem Triebstrang und einer Gondel, deren Außenseite im fertig montierten Zustand zumindest bereichsweise von zumindest einem Hüllensegment gebildet ist, wobei eine teilmontierte Gondel auf einer bereits errichteten Tragstruktur montiert ist. Ferner betrifft die Erfindung eine Verwendung eines Lastaufnahmemittels zur Durchführung des Verfahrens zum Zusammenbauen einer Windenergieanlage.

Bei der Errichtung aber auch bei der Wartung von Windenergieanlagen wird vielfach eine komplett ausgestattete Gondel auf die bereits vorhandene Tragstruktur, beispielsweise einen Turm, aufgesetzt. Dieses Verfahren lässt sich mit vertretbarem Aufwand jedoch nur bei relativ kleinen Windenergieanlagen durchführen. Bei größeren Windenergieanlagen ist die Gondelmasse so hoch, dass für ein solches Montageverfahren ein sehr teurer Kran mit entsprechend hoher Tragkraft eingesetzt werden müsste, was wirtschaftlich nicht sinnvoll ist. Aus diesem Grund wird bei großen Windenergieanlagen vielfach eine teilmontierte oder nicht vollständig ausgestattete Gondel auf der Tragstruktur montiert. Da die schwersten Bauteile, die innerhalb der Gondel der Windenergieanlage angeordnet werden müssen, die Komponenten des Triebstrangs sind, umfasst eine solche teilmontierte Gondel in der Regel keinen Triebstrang. Dieser wird anschließend zur Gondel hinaufgehoben, dort positioniert und montiert. In einem abschließenden Hebevorgang wird das Gondeldach aufgesetzt und die Gondel verschlossenen.

Ein solches Montageverfahren erfordert eine große Anzahl von Hebevorgängen, was zeit- und kostenaufwendig ist. Es kommt immer wieder zu Verzögerungen bei der Montage, da einzelne Hebevorgänge beispielsweise aufgrund der äußeren Wetterbedingungen nicht durchgeführt werden können.

Die Dokumente US 2017/074246 A1, US 2010/034658 A1 und CN 105540410 A offenbaren Verfahren bzw. Mittel zum Errichten von Windenergieanlagen.

Es ist eine Aufgabe der Erfindung, ein Verfahren zum Zusammenbauen einer Windenergieanlage und eine Verwendung eines Lastaufnahmemittels zur Durchführung des Verfahrens anzugeben, wobei die Anzahl der beim Zusammenbau erforderlichen Hebevorgänge reduziert werden soll.

Die Aufgabe wird gelöst durch ein Verfahren gemäß Anspruch 1.

Indem bei diesem Verfahren das Hüllensegment und die zumindest eine Komponente des Triebstrangs gemeinsam gehoben werden, kann die Anzahl der zum Zusammenbauen der Windenergieanlage erforderlichen Hebevorgänge reduziert werden. Dies reduziert die Errichtungszeit der Windenergieanlage und somit die damit verbundenen Kosten. Bei dem Vorgang des Zusammenbauens handelt es sich also insbesondere um das Errichten der Windenergieanlage. Als Hebezeug wird vorzugsweise ein Kran eingesetzt, beispielsweise ein mobiler Kran. Auf den Einsatz eines Großkrans kann vorteilhaft verzichtet werden, da die Gondel nicht als Ganzes angehoben wird. Dies reduziert die Errichtungskosten der Windenergieanlage.

Im Kontext der vorliegenden Beschreibung wird unter "teilmontiert" ein Zustand der Windenergieanlage verstanden, bei dem kein oder nicht alle Hüllensegmente an der Außenseite der Gondel montiert sind. Ferner ist der Triebstrang noch nicht montiert oder es sind nicht alle Komponenten des Triebstrangs montiert.

Unter dem Triebstrang der Windenergieanlage werden die Rotornabe, die Rotorwelle, ein ggf. vorhandenes Getriebe und der Generator verstanden.

Ferner wird im Kontext der vorliegenden Beschreibung unter einer Komponente des Triebstrangs eines der zuvor genannten Bauteile des Triebstrangs als Ganzes oder aber Komponenten dieser Bauteile verstanden. Dabei sind Bauteile keine Kleinteile, wie beispielsweise Schrauben oder Bolzen. Die Bauteile weisen insbesondere ein Gewicht von zumindest 50 kg auf. Eine Komponente des Triebstrangs ist ebenso beispielsweise das Getriebe, der Generator oder die Rotornabe als Ganzes. Dabei können diese Bauteile sowohl einzeln gemeint sein oder sie sind aneinandergekoppelt, und bilden so eine Komponente des Triebstrangs. Es ist also beispielsweise vorgesehen, dass als Komponente des Triebstrangs ein Getriebe einschließlich des daran montierten Generators verstanden wird.

Das Hüllensegment und die zumindest eine Komponente des Triebstrangs werden gemeinsam bis zu der Gondel angehoben. In diesem Zusammenhang ist unter "bis zu der Gondel" zu verstehen, dass die gemeinsame Einheit aus der Komponente des Triebstrangs und dem Hüllensegment bis zumindest auf eine Höhe angehoben wird, so dass diese in die Gondel hineingehoben werden kann. Beispielsweise wird die gemeinsame Einheit so weit angehoben, dass ihre Unterkante sich oberhalb einer Oberkante einer Montageöffnung der teilmontierten Gondel befindet.

Das Hüllensegment ist gemäß der Erfindung ein Teil oder ein Segment einer Verkleidung der Gondel, beispielsweise ein Teil oder Segment des Gondeldachs. Ferner beispielsweise handelt es sich um ein vorderes Teil des Gondeldachs, welches der Nabe zugewandt ist. Ebenso kann es sich um eine Verkleidung oder einen Teil der Verkleidung der Rotornabe handeln.

Gemäß einer vorteilhaften Ausführungsform ist vorgesehen, dass das Hüllensegment und die Komponente des Triebstrangs durch Anschlagen des Hüllensegments und der Komponente des Triebstrangs an dem Lastaufnahmemittel temporär zu einer Einheit zusammengekoppelt werden und anschließend diese Einheit angehoben und in der Gondel an einem Montageplatz positioniert wird.

Das Hüllensegment befindet sich beispielsweise oberhalb der Komponente des Triebstrangs. Ferner ist beispielsweise vorgesehen, dass das Hüllensegment und die Komponente des Triebstrangs so zu einer Einheit zusammengekoppelt werden, dass sowohl die Komponente des Triebstrangs als auch das Hüllensegment bei der Positionierung dieser zusammengekoppelten Einheit sich an ihrem jeweils vorgesehenen Montageplatz innerhalb der Gondel befinden. Mit anderen Worten wird also bereits beim Zusammenkoppeln des Hüllensegments mit der Komponente des Triebstrangs eine Vorplatzierung der Einheiten vorgenommen, diese werden so platziert, wie sie später in der Gondel montiert werden sollen.

Dies beschleunigt vorteilhaft den Montageprozess der Windenergieanlage.

Gemäß einer weiteren vorteilhaften Ausführungsform ist das Verfahren dadurch fortgebildet, dass zuerst das Hüllensegment an dem Lastaufnahmemittel angeschlagen, anschließend das Lastaufnahmemittel mit dem daran angeschlagenen Hüllensegment oberhalb der Komponente des Triebstrangs positioniert und anschließend die Komponente des Triebstrangs an dem Lastaufnahmemittel angeschlagen wird.

So ist es möglich, dass die beiden Bauteile schnell und effizient an dem Lastaufnahmemittel angeschlagen werden.

Gemäß einer weiteren Ausführungsform ist vorgesehen, dass das Hüllensegment und die Komponente des Triebstrangs von dem Lastaufnahmemittel abgeschlagen werden, ohne dass hierzu Arbeiten außerhalb der Gondel durchgeführt werden.

Es ist also mit anderen Worten insbesondere vorgesehen, dass die ersten Lastaufnahmemittel so an dem Hüllensegment angeschlagen werden, dass diese von dem Hüllensegment getrennt werden können, ohne dass hierzu die Gondel verlassen werden muss. Die Tatsache, dass diese Arbeiten durchgeführt werden können, ohne dass ein Arbeiter die Gondel verlässt, trägt wesentlich zur Erhöhung der Arbeitssicherheit bei, und beschleunigt außerdem den Zusammenbau der Windenergieanlage.

Ferner ist das Verfahren gemäß einer weiteren Ausführungsform dadurch fortgebildet, dass das Lastaufnahmemittel, bevor das Hüllensegment an dem Lastaufnahmemittel angeschlagen wird oder nachdem das Hüllensegment an dem Lastaufnahmemittel angeschlagen wurde, mit einem von dem Lastaufnahmemittel umfassten Ausgleichsgewicht in eine vorbestimmte Position austariert wird.

Die Möglichkeit, die aufgenommenen Lasten an dem Lastaufnahmemittel auszutarieren schafft die Möglichkeit, unterschiedlichste Lasten aufzunehmen und anzuheben. Mit anderen Worten ist also das Verfahren sehr flexibel. Beispielsweise ist vorgesehen, dass das Lastaufnahmemittel oder das Hüllensegment zumindest näherungsweise waagerecht oder in einer gewünschten Position, beispielsweise in einem gewünschten Winkel, der von der Waagerechten abweicht, aufgenommen wird. Vorteilhaft kann die Einheit aus Hüllensegment und Komponente des Triebstrangs in eine Position gebracht werden, welche für die spätere Montage gut geeignet ist.

Ferner ist das Verfahren insbesondere dadurch fortgebildet, dass ein Gewicht der Komponente des Triebstrangs höher ist als ein Gewicht des Hüllensegments.

Beispielsweise beträgt das Gewicht der Komponente des Triebstrangs zumindest das Doppelte, das Vierfache, das Zehnfache oder das Zwanzigfache des Gewichts des Hüllensegments. Indem die schwerere Komponente unterhalb der leichteren Komponente angeordnet wird, ist es möglich, eine stabile Einheit für den Hebevorgang bereitzustellen.

Gemäß einer weiteren vorteilhaften Ausführungsform ist vorgesehen, dass das Hüllensegment mechanisch starr an dem Lastaufnahmemittel angeschlagen wird und die Komponente des Triebstrangs mit mechanisch flexiblen Anschlagmitteln an dem Lastaufnahmemittel angeschlagen wird.

Im Kontext der vorliegenden Beschreibung wird unter einer mechanisch starren Verbindung beispielsweise eine Flanschverbindung oder eine Verbindung mittels Streben oder Konsolen verstanden. Mechanisch flexible Anschlagmittel sind beispielsweise Gurte oder Ketten.

Indem das leichtere Hüllensegment mechanisch starr an dem Lastaufnahmemittel angeschlagen wird, ist es möglich, dieses sicher zu transportieren, auch wenn beispielsweise während des Hebevorgangs Wind an dem großflächigen Hüllensegment angreift. Nach dem Einsetzen der Einheit aus Hüllensegment und Komponente des Triebstrangs in die Gondel ist es ferner vorteilhaft, wenn die Komponente des Antriebsstrang mittels flexibler Anschlagmittel befestigt ist, da solche Anschlagmittel sich innerhalb der Gondel leichter als starre Elemente handhaben und abschlagen lassen.

Gemäß einer weiteren Ausführungsform ist vorgesehen, dass das Lastaufnahmemittel unmittelbar auf dem Hüllensegment abgelegt und anschließend das Hüllensegment an dem Lastaufnahmemittel angeschlagen wird.

Mit anderen Worten wird also das Lastaufnahmemittel unmittelbar oberhalb des Hüllensegments montiert. Indem also das Lastaufnahmemittel direkt auf dem Gondeldach abgelegt und beispielsweise von unten gesichert wird, wird die erforderliche Hakenhöhe des Hebezeugs minimiert.

Das oben beschriebene Verfahren zum Zusammenbauen der Windenergieanlage ist ebenso im Rahmen eines Verfahrens zum Reparieren einer Windenergieanlage, beispielsweise bei einem Großkomponententausch, geeignet. Bei einem Verfahren zum Reparieren einer Windenergieanlage mit einer Gondel und einem Triebstrang, der zumindest teilweise innerhalb einer Gondel montiert ist, wobei eine Außenseite der Gondel zumindest abschnittsweise von zumindest einem Hüllensegment gebildet ist, werden ein Hüllensegment und eine Komponente des Triebstrangs gemeinsam an einem einzigen Lastaufnahmemittel angeschlagen. In einem ersten Hebevorgang werden von einem mit dem Lastaufnahmemittel verbundenen Hebezeug, beispielsweise einem Kran, die beiden Komponenten aus der Gondel gehoben bzw. von dieser entfernt. Die Komponente des Triebstrangs wird repariert oder ausgetauscht und anschließend wird die reparierte oder ausgetauschte Komponente des Triebstrangs gemeinsam mit dem Hüllensegment in einem Verfahren nach einem oder mehreren der zuvor genannten Ausführungsformen wieder in die Windenergieanlage verbracht.

Die Aufgabe wird ferner gelöst durch eine Verwendung eines Lastaufnahmemittels zur Durchführung des Verfahrens zum Zusammenbauen einer Windenergieanlage.

Auf die Verwendung des Lastaufnahmemittels treffen gleiche oder ähnliche Vorteile zu wie sie bereits zuvor im Hinblick auf das Verfahren zum Zusammenbau der Windenergieanlage erwähnt wurden.

Das Lastaufnahmemittel ist insbesondere dadurch fortgebildet, dass die ersten und die zweiten Anschlagmittel so eingerichtet sind, dass im angeschlagenen Zustand das Hüllensegment oberhalb der Komponente des Triebstrangs positioniert ist. Beispielsweise ist die Komponente des Triebstrangs frei schwebend unterhalb des Hüllensegments aufgenommen.

Gemäß einer vorteilhaften Ausführungsform ist das Lastaufnahmemittel dadurch fortgebildet, dass ein Ausgleichsgewicht zum Austarieren des Lastaufnahmemittels umfasst ist. Die Aufnahme zur Kopplung mit dem Hebezeug ist ferner insbesondere an dem Lastaufnahmemittel vorhanden.

Erfindungsgemäß ist vorgesehen, dass die ersten Anschlagmittel mechanisch starr sind, so dass das Hüllensegment mechanisch starr an dem Lastaufnahmemittel anschlagbar ist, und die zweiten Anschlagmittel mechanisch flexibel sind, so dass die zumindest eine Komponente des Triebstrangs mechanisch flexibel an dem Lastaufnahmemittel anschlagbar ist.

Das Lastaufnahmemittel ist insbesondere dadurch fortgebildet, dass die ersten Lastaufnahmemittel derart eingerichtet sind, dass das unmittelbar auf einer Außenseite des Hüllensegments abgelegte Lastaufnahmemittel an das Hüllensegment anschlagbar ist.

Das Lastaufnahmemittel ist beispielsweise eine T-förmige Traverse.

Weitere Merkmale der Erfindung werden aus der Beschreibung erfindungsgemäßer Ausführungsformen zusammen mit den Ansprüchen und den beigefügten Zeichnungen ersichtlich.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- FIG. 1: eine schematisch vereinfachte Ansicht einer Windenergieanlage mit teilmontierter Gondel und einen Kran als beispielhaftes Hebezeug,
- FIG. 2: eine schematisch vereinfachte Perspektivansicht eines Lastaufnahmemittels,
- FIG. 3: eine Detailansicht des aus Figur 2 bekannten Lastaufnahmemittels im Bereich eines Ausgleichsgewichts,
- FIG. 4: eine schematisch vereinfachte Draufsicht auf ein Gondeldach einer Windenergieanlage als beispielhaftes Hüllensegment,
- FIG. 4a: eine schematisch vereinfachte Schnittansicht eines zum Verschluss von in dem Gondeldach vorhandenen Hebeöffnungen vorgesehenen Verschlusselements,
- FIG. 5: eine schematisch vereinfachte perspektivische Ansicht eines an dem Lastaufnahmemittel angeschlagenen Gondeldachs,
- FIG. 6: eine schematisch vereinfachte Seitenansicht einer an einem Lastaufnahmemittel angeschlagenen Einheit umfassend einen Triebstrang der Windenergieanlage und ein Gondeldach,
- FIG. 7: eine schematisch vereinfachte Perspektivansicht einer weiteren an einem Lastaufnahmemittel angeschlagenen Einheit umfassend einen Triebstrang der Windenergieanlage und ein Gondeldach.

In den Zeichnungen sind jeweils gleiche oder gleichartige Elemente und/oder Teile mit denselben Bezugsziffern versehen, so dass von einer erneuten Vorstellung jeweils abgesehen wird.

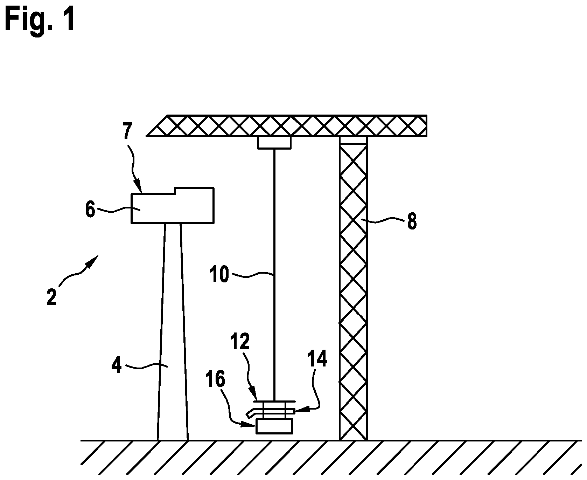

FIG. 1 zeigt eine schematisch vereinfachte Ansicht einer Windenergieanlage 2, deren Tragstruktur 4, beispielsweise ein Turm, bereits errichtet ist. Die Tragstruktur 4 ist lediglich beispielhaft als Gründung auf Land dargestellt, es kann sich bei der Windenergieanlage 2 ebenso um eine Offshore-Anlage handeln. Auf der bereits errichteten Tragstruktur 4 ist eine teilmontierte Gondel 6 vorhanden. Die Gondel 6 wird als "teilmontiert" bezeichnet, da noch kein oder nicht alle Hüllensegmente an einer Außenseite 7 der Gondel 6 montiert sind. Hüllensegmente sind beispielsweise Teile oder Segmente einer Verkleidung der Gondel 6, beispielsweise ein Teil oder Segment des Gondeldachs. Ferner beispielsweise handelt es sich bei den Hüllensegmenten um eine Verkleidung oder einen Teil der Verkleidung einer Rotornabe. Beispielhaft ist in FIG. 1 angedeutet, dass das Gondeldach noch nicht montiert ist.

Bei der dargestellten Windenergieanlage 2 ist ferner der Triebstrang noch nicht innerhalb der Gondel 6 montiert. Als Triebstrang werden im Kontext der vorliegenden Beschreibung die Rotornabe, die Rotorwelle, ein ggf. vorhandenes Getriebe und Generator verstanden. Komponenten des Triebstrangs sind eine oder mehrere der zuvor genannten Bauteile des Triebstrangs als Ganzes oder auch Komponenten dieser Bauteile.

Ferner ist in FIG. 1 ein Kran, als Beispiel für ein Hebezeug 8, dargestellt. Abweichend von der schematisch vereinfachten Darstellung in FIG. 1 kann es sich bei dem Hebezeug 8 um einen mobilen Kran handeln. An einem Seil 10 des Hebezeugs 8 ist ein Lastaufnahmemittel 12 aufgenommen. An dem Lastaufnahmemittel 12 ist ein Hüllensegment 14, beispielsweise ein Gondeldach, und eine Komponente 16 des Triebstrangs der Windenergieanlage 2 angeschlagen. Es ist möglich, in einem einzigen Hebevorgang, der von dem Hebezeug 8 durchgeführt wird, sowohl das an dem Lastaufnahmemittel 12 angeschlagene Hüllensegment 14 als auch die ebenfalls an dem Lastaufnahmemittel 12 angeschlagene Komponente 16 des Triebstrangs bis zu der Gondel 6 anzuheben. Das Hüllensegment 14 und die Komponente 16 des Triebstrangs werden so hoch gehoben, dass diese gemeinsam in die oben offene Gondel 6 hineingehoben werden können.

Um diesen gemeinsamen Hebevorgang durchführen zu können, werden die Komponente 16 des Triebstrangs, das Hüllensegment 14 und das Lastaufnahmemittel 12 temporär zu einer Einheit zusammengekoppelt. Diese Einheit wird in der Gondel 6 positioniert, sodass sich sowohl die Komponente 16 des Triebstrangs als auch das Hüllensegment 14 an der gewünschten Einbauposition befinden. Beispielsweise handelt es sich bei dem Hüllensegment 14 um das Gondeldach und bei der Komponente 16 des Triebstrangs um eine gekoppelte Einheit aus Getriebe und Generator. Mit anderen Worten können also das Getriebe und der Generator gemeinsam mit dem Gondeldach durch das Lastaufnahmemittel 12 in einem einzigen Hebevorgang eines Krans in die Gondel 6 der Windenergieanlage 2 gehoben und dort positioniert werden. Bevorzugt handelt es sich bei dem Hüllensegment 14 um das Gondeldach und bei der Komponente 16 des Triebstrangs um eine gekoppelte Einheit aus Rotorwelle und Getriebe.

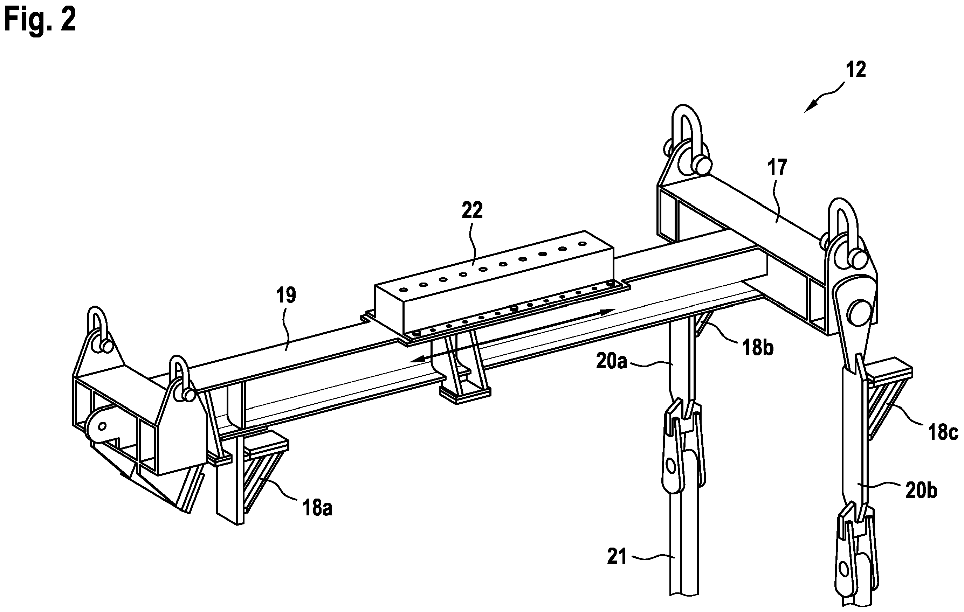

FIG. 2 zeigt eine schematisch vereinfachte Perspektivansicht eines in dem beschriebenen Verfahren zum Zusammenbauen der Windenergieanlage 2 verwendeten Lastaufnahmemittels 12. Das dargestellte Lastaufnahmemittel 12 ist beispielhaft T-förmig. Es umfasst eine kurze Traverse 17 und eine lange Traverse 19. Die Traversen 17, 19 sind ferner beispielhaft als Doppel-T-Träger ausgestaltet. Die Traversen 17, 19 sind beispielsweise aus Stahl hergestellt.

Das Lastaufnahmemittel 12 umfasst erste Anschlagmittel 18a, 18b und 18c, die allgemein auch mit Bezugszeichen 18 bezeichnet werden sollen. Diese ersten Anschlagmittel 18 dienen zum Anschlagen des Hüllensegments an dem Lastaufnahmemittel 12. Es handelt sich bei den ersten Anschlagmitteln 18 um klappbare Aufnahmen, deren schräg nach oben verlaufende Stege zum Herunterlassen der waagerecht verlaufenden Auflagefläche ausgehakt werden. Zum Aufnehmen des Hüllensegments 14 werden diese Aufnahmen 18 durch beispielsweise in einem Gondeldach vorhandene Öffnungen hindurchgeführt. Wenn das Lastaufnahmemittel 12 auf dem Gondeldach aufliegt, werden die entsprechenden Aufnahmen in die dargestellte Position ausgeklappt.

Das Lastaufnahmemittel 12 umfasst ferner zweite Anschlagmittel 20a, 20b, welche allgemein auch mit Bezugszeichen 20 bezeichnet werden soll. Diese zweiten Anschlagmittel 20 dienen zum Anschlagen zumindest einer Komponente des Triebstrangs der Windenergieanlage 2 an dem Lastaufnahmemittel 12. Es handelt sich bei diesem zweiten Anschlagmittel 20 beispielsweise um schwenkbar an der kurzen Traverse 17 des Lastaufnahmemittels 12 befestigte Streben. Wie im Zusammenhang mit dem Anschlagmittel 20b in FIG. 2 angedeutet, können ferner Gurte 21 eingesetzt werden, um die Komponente 16 des Triebstrangs an dem Lastaufnahmemittel 12 zu befestigen.

Das Lastaufnahmemittel 12 umfasst ferner ein Ausgleichsgewicht 22, welches beispielhaft auf der ersten Traverse 19 der T-förmigen Struktur verschiebbar (wie durch Doppelpfeil angedeutet) angebracht ist. Das Ausgleichsgewicht 22 wird zum Austarieren des Lastaufnahmemittels 12 eingesetzt. Wenn dieser Vorgang beendet ist, wird das Ausgleichsgewicht 22 auf der ersten Traverse 19 des Lastaufnahmemittels 12 fixiert.

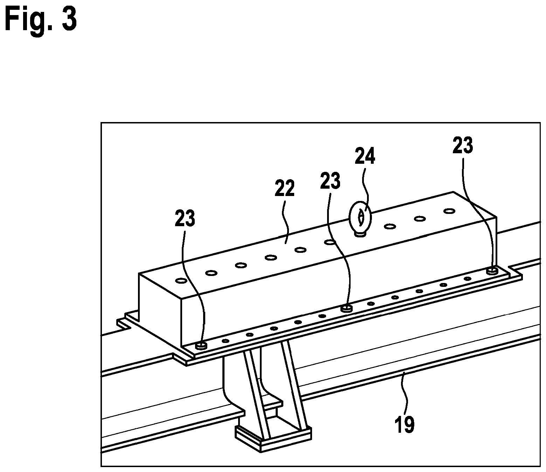

FIG. 3 zeigt eine Detailansicht des aus FIG. 2 bekannten Lastaufnahmemittels 12 im Bereich des Ausgleichsgewichts 22. Das Ausgleichsgewicht 22 wird über einen Lochflansch mithilfe geeigneter Schrauben 23 an der ersten Traverse 19 befestigt. Ferner ist eine Aufnahme 24, beispielhaft dargestellt ist eine Öse, zur Kopplung des Lastaufnahmemittels 12 mit dem Hebezeug 8, beispielsweise mit einem Kranhaken, vorgesehen.

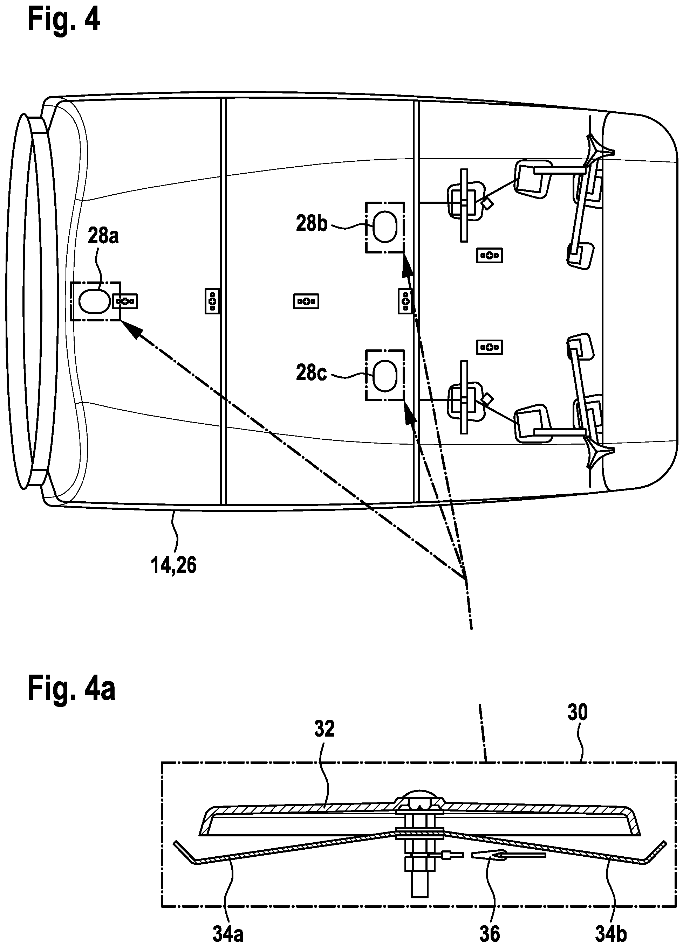

FIG. 4 zeigt eine schematisch vereinfachte Draufsicht auf ein Gondeldach 26 einer Windenergieanlage 2 als beispielhaftes Hüllensegment 14. Im Gondeldach 26 sind Hebeöffnungen 28a, 28b, 28c, welche gemeinsam auch mit Bezugszeichen 28 bezeichnet werden sollen, vorhanden. Durch die Hebeöffnungen 28 werden die zweiten Anschlagmittel 20, mit denen die Komponente 16 des Triebstrangs an dem Lastaufnahmemittel 12 angeschlagen wird, geführt.

Die Hebeöffnungen 28 sind mit Verschlussvorrichtungen 30 verschließbar, von denen beispielhaft eine in FIG. 4a in einer schematisch vereinfachten Querschnittsansicht gezeigt ist. Die Verschlussvorrichtung 30 ist so ausgebildet, dass sie von der Innenseite des Hüllensegments 14 her verschließbar sind. Die Verschlussvorrichtung 30 weist einen Deckel 32 sowie Verschlussfedern 34a, 34b auf. Die Verschlussvorrichtungen 30 verbleiben auf einer Außenseite des Gondeldachs 26 und sind über entsprechende Verlierersicherungen 36 am Gondeldach 26 befestigt. Um einen festen und sicheren Verschluss der Hebeöffnungen 28 sicherzustellen, können die Verschlussfedern 34a, 34b mithilfe der auf der Schraube vorhandenen Muttern angezogen werden.

Vorteilhaft ist es zum Verschluss der Hebeöffnungen 28 nicht erforderlich, dass ein Arbeiter das Dach der Gondel 6 betritt.

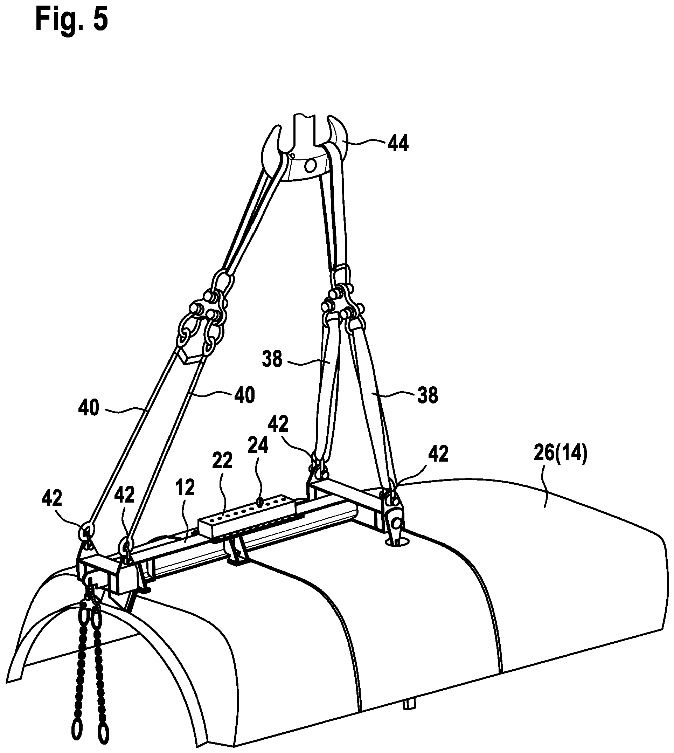

FIG. 5 zeigt eine schematisch vereinfachte perspektivische Ansicht eines an dem Lastaufnahmemittel 12 angeschlagenen Gondeldachs 26. Das Lastaufnahmemittel 12 ist über Schwerlastgurte 38 und geeignete Ketten 40 mit Schäkeln 42 an entsprechenden Aufnahmepunkten mit einem Kranhaken 44 des Hebezeugs 6 verbunden.

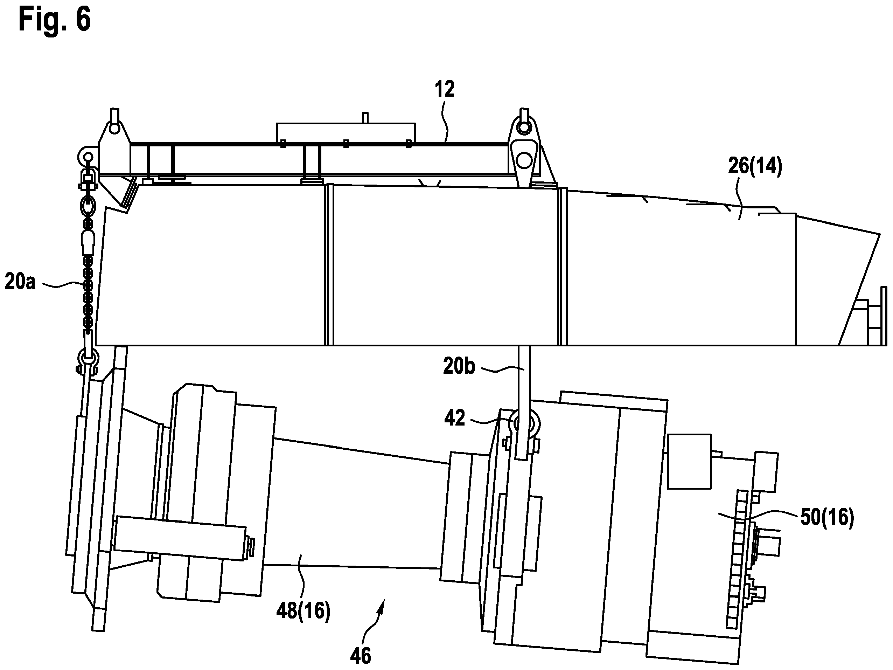

FIG. 6 zeigt eine schematisch vereinfachte Seitenansicht einer an dem Lastaufnahmemittel 12 angeschlagenen Einheit, welche einen Teil-Triebstrang 46 und ein Gondeldach 26 umfasst. Der Teil-Triebstrang 46 umfasst beispielhaft eine Rotorwelle 48 und ein Getriebe 50. Diese Komponenten 16 des Triebstrangs sind über zweite Anschlagmittel 20a, 20b an dem Lastaufnahmemittel 12 angeschlagen. Die Komponenten 16 des Triebstrangs sind im Vergleich zum Gondeldach 26 die schwereren Komponenten und sind unterhalb des Gondeldachs 26 angeschlagen.

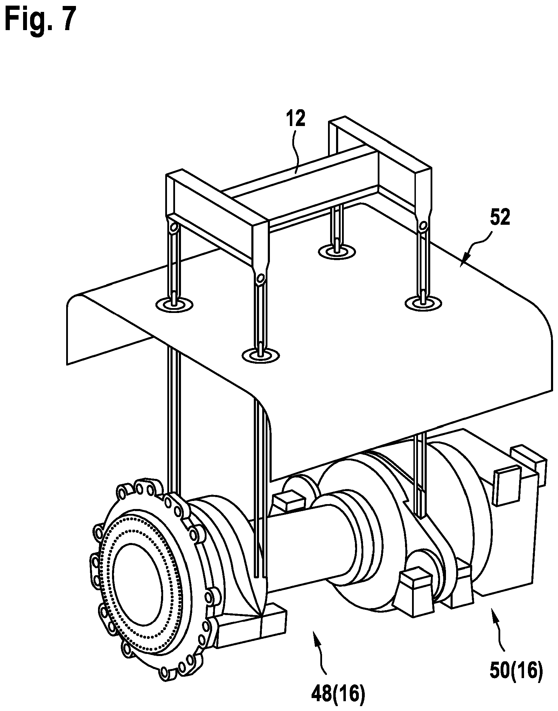

FIG. 7 zeigt eine weitere schematisch vereinfachte Perspektivansicht einer weiteren an einem Lastaufnahmemittel 12 angeschlagenen Einheit aus einem Dachsegment 52 sowie einer Rotorwelle 48 und einem Getriebe 50. Gemäß dem dargestellten Ausführungsbeispiel ist das Lastaufnahmemittel 12 als doppele T-Struktur ausgeführt.

Das Lastaufnahmemittel 12 und das Hüllensegment 14, beispielsweise das in FIG. 4 gezeigte Gondeldach 26, bilden gemeinsam ein Montagesystem zum Zusammenbauen einer Windenergieanlage 2. Das Hüllensegment 14, beispielsweise das Gondeldach 26 umfasst Hebeöffnungen 28, die passend zum Durchführen der zweiten Anschlagmittel 20 ausgebildet und angeordnet sind. Mit anderen Worten sind also die Hebeöffnungen 28 so angeordnet, dass die zweiten Anschlagmittel 20 des Lastaufnahmemittels 12 durch diese Hebeöffnungen 28 hindurchgeführt werden können und die zweiten Anschlagmittel 20 passend an entsprechenden Anschlagpunkten, der unterhalb des Hüllensegments 14 angeordneten Komponente 16, beispielsweise einer Kombination aus Rotorwelle 48 und Getriebe 50, angeschlagen werden können. Ferner sind die Hebeöffnungen 28 mittels Verschlussvorrichtungen 30 (vgl. FIG. 2a) von der Innenseite des Hüllensegments 14 her verschließbar. Beim Abschlagen der Komponente 16 des Triebstrangs von dem Lastaufnahmemittel 12 ist es also nicht erforderlich, dass ein Arbeiter die Gondel 6 der Windenergieanlage 2 verlässt.

Im Rahmen der Erfindung sind Merkmale, die mit "insbesondere" oder "vorzugsweise" gekennzeichnet sind, als fakultative Merkmale zu verstehen.

### Bezugszeichenliste

- 2: Windenergieanlage
- 4: Tragstruktur
- 6: Gondel
- 7: Außenseite
- 8: Hebezeug
- 10: Seil
- 12: Lastaufnahmemittel
- 14: Hüllensegment
- 16: Komponente des Triebstrangs
- 18a, 18b, 18c, 18: erste Anschlagmittel
- 17: kurze Traverse
- 20a, 20b, 20: zweite Anschlagmittel.
- 19: lange Traverse
- 21: Gurt
- 22: Ausgleichsgewicht
- 23: Schrauben
- 24: Aufnahme
- 26: Gondeldach
- 28a, 28b, 28c, 28: Hebeöffnungen
- 30: Verschlussvorrichtung
- 32: Deckel
- 34a, 34b: Verschlussfedern
- 36: Verliersicherung
- 38: Schwerlastgurte
- 40: Kette
- 42: Schäkel
- 44: Kranhaken
- 46: Teil-Triebstrang
- 48: Rotorwelle
- 50: Getriebe
- 52: Dachsegment

## Patentansprüche

1. Verfahren zum Zusammenbauen einer Windenergieanlage (2) mit einem Triebstrang und einer Gondel (6), deren Außenseite (7) im fertig montierten Zustand zumindest bereichsweise von zumindest einem Hüllensegment, das ein Teil oder ein Segment einer Verkleidung der Gondel ist, gebildet ist, wobei eine teilmontierte Gondel (6) auf einer bereits errichteten Tragstruktur (4) montiert ist, und das Hüllensegment (14) und zumindest eine Komponente (16) des Triebstrangs gemeinsam an einem einzigen Lastaufnahmemittel (12) angeschlagen und in einem einzigen Hebevorgang von einem mit dem Lastaufnahmemittel (12) verbundenen Hebezeug (8) bis zu der Gondel (6) angehoben werden, **dadurch gekennzeichnet, dass** das Hüllensegment (14) mechanisch starr an dem Lastaufnahmemittel (12) angeschlagen wird und die Komponente (16) des Triebstrangs mit mechanisch flexiblen Anschlagmitteln (20) an dem Lastaufnahmemittel (12) angeschlagen wird.

2. Verfahren nach Anspruch 1, **dadurch gekennzeichnet, dass** das Hüllensegment (14) und die Komponente (16) des Triebstrangs durch Anschlagen des Hüllensegments (14) und der Komponente (16) des Triebstrangs an dem Lastaufnahmemittel (12) temporär zu einer Einheit zusammengekoppelt werden und anschließend diese Einheit angehoben und in der Gondel (6) an einem Montageplatz positioniert wird.

3. Verfahren nach Anspruch 2, **dadurch gekennzeichnet, dass** zuerst das Hüllensegment (14) an dem Lastaufnahmemittel (12) angeschlagen, anschließend das Lastaufnahmemittel (12) mit dem daran angeschlagenen Hüllensegment (14) oberhalb der Komponente (16) des Triebstrangs positioniert und anschließend die Komponente (16) des Triebstrangs an dem Lastaufnahmemittel (12) angeschlagen wird.

4. Verfahren nach Anspruch 2 oder 3, **dadurch gekennzeichnet, dass** das Hüllensegment (14) und die Komponente (16) des Triebstrangs von dem Lastaufnahmemittel (12) abgeschlagen werden, ohne dass hierzu Arbeiten außerhalb der Gondel (6) durchgeführt werden.

5. Verfahren nach einem der Ansprüche 1 bis 4, **dadurch gekennzeichnet, dass** das Lastaufnahmemittel (12), bevor das Hüllensegment (14) an dem Lastaufnahmemittel (12) angeschlagen wird oder nachdem das Hüllensegment (14) an dem Lastaufnahmemittel (12) angeschlagen wurde, mit einem von dem Lastaufnahmemittel (12) umfassten Ausgleichsgewicht (22) in eine vorbestimmte Position austariert wird.

6. Verfahren nach einem der Ansprüche 1 bis 5, **dadurch gekennzeichnet, dass** ein Gewicht der Komponente (16) des Triebstrangs höher ist als ein Gewicht des Hüllensegments (14).

7. Verfahren nach einem der Ansprüche 1 bis 6, **dadurch gekennzeichnet, dass** das Lastaufnahmemittel (12) unmittelbar auf dem Hüllensegment (14) abgelegt und anschließend das Hüllensegment (14) an dem Lastaufnahmemittel (12) angeschlagen wird.

8. Verwendung eines Lastaufnahmemittels (12) zur Durchführung eines Verfahrens nach einem der Ansprüche 1 bis 7, wobei das Lastaufnahmemittel (12) erste Anschlagmittel (18) zum Anschlagen des Hüllensegments (14) und zweite Anschlagmittel (20) zum Anschlagen zumindest einer Komponente (16) des Triebstrangs umfasst, so dass das Hüllensegment (14) und die zumindest eine Komponente (16) des Triebstrangs gemeinsam an dem Lastaufnahmemittel (12) anschlagbar sind, wobei das Lastaufnahmemittel (12) ferner eine Aufnahme (24) zur Kopplung mit einem Hebezeug (8) umfasst, wobei die ersten Anschlagmittel (18) mechanisch starr sind, so dass das Hüllensegment (14) mechanisch starr an dem Lastaufnahmemittel (12) anschlagbar ist, und die zweiten Anschlagmittel (20) mechanisch flexibel sind, so dass die zumindest eine Komponente (16) des Triebstrangs mechanisch flexibel an dem Lastaufnahmemittel (12) anschlagbar ist.

9. Verwendung des Lastaufnahmemittels (12) nach Anspruch 8, wobei die ersten und die zweiten Anschlagmittel (18, 20) so eingerichtet sind, dass im angeschlagenen Zustand das Hüllensegment (14) oberhalb der Komponente (16) des Triebstrangs positioniert ist.

10. Verwendung des Lastaufnahmemittels (12) nach Anspruch 8 oder 9, wobei das Lastaufnahmemittel (12) ein Ausgleichsgewicht (22) zum Austarieren des Lastaufnahmemittels (12) umfasst.

11. Verwendung des Lastaufnahmemittels (12) nach einem der Ansprüche 8 bis 10, wobei die ersten Anschlagmittel (18) derart eingerichtet sind, dass das unmittelbar auf einer Außenseite des Hüllensegments (14) abgelegte Lastaufnahmemittel (12) an das Hüllensegment (14) anschlagbar ist.

## Claims

1. A method of assembling a wind energy installation (2) comprising a drive train and a nacelle (6), the outside (7) of which in the completed, assembled state is formed at least in some areas by at least one cover segment which constitutes a portion or a segment of a cladding of the nacelle, wherein a partially assembled nacelle (6) is mounted on an already erected supporting structure (4), and the cover segment (14) and at least one component (16) of the drive train are jointly attached to a single load handling means (12) and are raised in a single lifting operation by a lifting gear unit (8) connected to the load handling means (12) up to the nacelle (6), **characterised in that** the cover segment (14) is attached to the load handling means (12) in a mechanically rigid manner, and the component (16) of the drive train is attached to the load handling means (12) by means of mechanically flexible attachment means (20).

2. The method according to claim 1, **characterised in that** the cover segment (14) and the component (16) of the drive train are temporarily coupled together into one unit by attaching the cover segment (14) and the component (16) of the drive train to the load handling means (12) and subsequently this unit is lifted and positioned at a mounting position in the nacelle (6).

3. The method according to claim 2, **characterised in that**, at first, the cover segment (14) is attached to the load handling means (12), then the load handling means (12) with the cover segment (14) attached thereto is positioned above the component (16) of the drive train and then the component (16) of the drive train is attached to the load handling means (12).

4. The method according to claim 2 or 3, **characterised in that** the cover segment (14) and the component (16) of the drive train are detached from the load handling means (12) without any work being carried out outside the nacelle (6) for this purpose.

5. The method according to any one of the claims 1 to 4, **characterised in that**, before the cover segment (14) is attached to the load handling means (12), or after the cover segment (14) has been attached to the load handling means (12), the load handling means (12) is balanced into a predetermined position by means of a balancing weight (22) which is comprised with the load handling means (12).

6. The method according to any one of the claims 1 to 5, **characterised in that** a weight of the component (16) of the drive train is greater than a weight of the cover segment (14).

7. The method according to any one of the claims 1 to 6, **characterised in that** the load handling means (12) is placed directly on the cover segment (14) and the cover segment (14) is then attached to the load handling means (12).

8. Use of a load handling means (12) for carrying out a method according to any one of the claims 1 to 7, wherein the load handling means (12) comprises first attachment means (18) for attaching the cover segment (14) and second attachment means (20) for attaching at least one component (16) of the drive train, so that the cover segment (14) and the at least one component (16) of the drive train can be attached together to the load handling means (12), wherein the load handling means (12) further comprises a receiving means (24) for coupling to a lifting gear unit (8), wherein the first attachment means (18) is mechanically rigid so that the cover segment (14) can be attached to the load handling means (12) in a mechanically rigid manner, and the second attachment means (20) is mechanically flexible so that the at least one component (16) of the drive train can be attached to the load handling means (12) in a mechanically flexible manner.

9. Use of the load handling means (12) according to claim 8, wherein the first and the second attachment means (18, 20) are set up in such a way that, in the attached condition, the cover segment (14) is positioned above the component (16) of the drive train.

10. Use of the load handling means (12) according to claim 8 or 9, wherein the load handling means (12) comprises a balancing weight (22) for balancing the load handling means (12).

11. Use of the load handling means (12) according to any one of the claims 8 to 10, wherein the first attachment means (18) is set up in such a way that the load handling means (12) placed directly on an outer side of the cover segment (14) can be attached to the cover segment (14).

## Revendications

1. Procédé de montage d'une éolienne (2) avec une ligne d'entraînement et une nacelle (6), dont le côté extérieur (7) est formé à l'état entièrement monté au moins par secteur par au moins un segment d'enveloppe, qui est une partie ou un segment d'un revêtement de la nacelle, dans lequel une nacelle (6) partiellement montée est montée sur une structure porteuse (4) déjà érigée, et le segment d'enveloppe (14) et au moins un composant (16) de la ligne d'entraînement sont accrochés conjointement à un moyen de suspension de charge (12) unique et soulevés dans une opération de levage unique par un engin de levage (8) relié au moyen de suspension de charge (12) jusqu'à la nacelle (6), **caractérisé en ce que** le segment d'enveloppe (14) est accroché de manière mécaniquement rigide au moyen de suspension de charge (12) et le composant (16) de la ligne d'entraînement est accroché avec des moyens d'accrochage (20) mécaniquement flexibles au moyen de suspension de charge (12).

2. Procédé selon la revendication 1, **caractérisé en ce que** le segment d'enveloppe (14) et le composant (16) de la ligne d'entraînement sont couplés temporairement en une unité par accrochage du segment d'enveloppe (14) et du composant (16) de la ligne d'entraînement au moyen de suspension de charge (12) et ensuite cette unité est soulevée et positionnée dans la nacelle (6) sur un lieu de montage.

3. Procédé selon la revendication 2, **caractérisé en ce que** le segment d'enveloppe (14) est d'abord accroché au moyen de suspension de charge (12), ensuite le moyen de suspension de charge (12) est positionné avec le segment d'enveloppé (14) qui y est accroché au-dessus du composant (16) de la ligne d'entraînement et ensuite le composant (16) de la ligne d'entraînement est accroché au moyen de suspension de charge (12).

4. Procédé selon la revendication 2 ou 3, **caractérisé en ce que** le segment d'enveloppe (14) et le composant (16) de la ligne d'entraînement sont décrochés du moyen de suspension de charge (12) sans que des travaux soient réalisés pour ce faire à l'extérieur de la nacelle (6).

5. Procédé selon l'une quelconque des revendications 1 à 4, **caractérisé en ce que** le moyen de suspension de charge (12), avant que le segment d'enveloppe (14) soit accroché au moyen de suspension de charge (12) ou après que le segment d'enveloppe (14) a été accroché au moyen de suspension de charge (12), est équilibré avec un contrepoids (22) compris par le moyen de suspension de charge (12) dans une position prédéterminée.

6. Procédé selon l'une quelconque des revendications 1 à 5, **caractérisé en ce qu'**un poids du composant (16) de la ligne d'entraînement est supérieur à un poids du segment d'enveloppe (14).

7. Procédé selon l'une quelconque des revendications 1 à 6, **caractérisé en ce que** le moyen de suspension de charge (12) est déposé directement sur le segment d'enveloppe (14) et ensuite le segment d'enveloppe (14) est accroché au moyen de suspension de charge (12).

8. Utilisation d'un moyen de suspension de charge (12) pour la réalisation d'un procédé selon l'une quelconque des revendications 1 à 7, dans laquelle le moyen de suspension de charge (12) comprend des premiers moyens d'accrochage (18) pour accrocher le segment d'enveloppe (14) et des deuxièmes moyens d'accrochage (20) pour accrocher au moins un composant (16) de la ligne d'entraînement, de sorte que le segment d'enveloppe (14) et l'au moins un composant (16) de la ligne d'entraînement peuvent être accrochés conjointement au moyen de suspension de charge (12), dans laquelle le moyen de suspension de charge (12) comprend en outre un logement (24) pour le couplage avec un engin de levage (8), dans laquelle les premiers moyens d'accrochage (18) sont mécaniquement rigides de sorte que le segment d'enveloppe (14) peut être accroché de manière mécaniquement rigide au moyen de suspension de charge (12), et les deuxièmes moyens d'accrochage (20) sont mécaniquement flexibles, de sorte que l'au moins un composant (16) de la ligne d'entraînement peut être accroché de manière mécaniquement flexible au moyen de suspension de charge (12).

9. Utilisation du moyen de suspension de charge (12) selon la revendication 8, dans laquelle les premiers et les deuxièmes moyens d'accrochage (18, 20) sont aménagés de sorte qu'à l'état accroché le segment d'enveloppe (14) est positionné au-dessus du composant (16) de la ligne d'entraînement.

10. Utilisation du moyen de suspension de charge (12) selon la revendication 8 ou 9, dans laquelle le moyen de suspension de charge (12) comprend un contrepoids (22) pour équilibrer le moyen de suspension de charge (12).

11. Utilisation du moyen de suspension de charge (12) selon l'une quelconque des revendications 8 à 10, dans laquelle les premiers moyens d'accrochage (18) sont aménagés de sorte que le moyen de suspension de charge (12) déposé directement sur un côté extérieur du segment d'enveloppe (14) peut être accroché au segment d'enveloppe (14).
